# EUROPÄISCHE PATENTSCHRIFT

(11) **EP 2 987 616 B1**
(45) Veröffentlichungstag und Bekanntmachung des Hinweises auf die Patenterteilung: **12.12.2018**
(21) Anmeldenummer: 15189461.5
(22) Anmeldetag: 19.08.2005
(51) Int. Cl.: B29B 11/14, B29C 49/00, B29L 31/00, B29C 49/12, B29C 49/58, B29K 23/00, B29K 27/06, B29K 67/00, B29C 49/42, B29C 49/48, B29D 22/00

(54) **PREFORM ZUR HERSTELLUNG EINER KUNSTSTOFFFLASCHE**
PREFORM FOR PRODUCING A PLASTIC BOTTLE
PREFORME POUR LA FABRICATION UNE BOUTEILLE EN MATIERE PLASTIQUE

(30) Priorität: 10.09.2004 CH 14942004; 07.12.2004 CH 20252004
(43) Veröffentlichungstag der Anmeldung: 24.02.2016
(62) Teilanmeldung aus: 05783025.9
(73) Patentinhaber: Alpla-Werke Alwin Lehner GmbH und Co.KG, 6971 Hard (AT)
(72) Erfinder: Lehner, Alwin, 6971 Hard (AT); Künz, Johann, 6971 Hard (AT); Düringer, Markus, 6972 Fussach (AT)
(74) Vertreter: Riederer Hasler & Partner Patentanwälte AG

(56) Entgegenhaltungen:
- WO-A-98/52729
- US-A- 4 615 667
- US-A1- 2002 037 338
- US-B1- 6 264 050
- US-B1- 6 273 705
- PATENT ABSTRACTS OF JAPAN Bd. 0031, Nr. 9 (C-58), 12. September 1979 (1979-09-12) & JP 54, 086560, A, (MITSUBISHI PLASTICS IND LTD), 10. Juli 1979 (1979-07-10)

## Beschreibung

Die Erfindung betrifft einen Preform zur Herstellung einer Kunststoffflasche, insbesondere einer PET-Flasche, in einem Blas- bzw. Streckblasverfahren. Ein geeignetes Verfahren sowie eine Blasform werden ebenfalls vorgeschlagen.

Die in der Vergangenheit üblichen Behältnisse aus Weiss- oder Buntblech, aus Glas oder auch aus Keramik werden in zunehmendem Masse von Behältnissen aus Kunststoff abgelöst. Insbesondere für die Verpackung von schüttfähige Medien, beispielsweise von Reinigungsutensilien, Körperpflegemitteln, Kosmetika, Kfz-Medien, usw., kommen hauptsächlich Kunststoffbehältnisse zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Die am häufigsten eingesetzten Kunststoffflaschen bestehen aus Polyethylenterephthalat bzw. PET und werden in einem sogenannten Spritzblas- bzw. Spritzstreckblasverfahren hergestellt. Bei diesen Verfahren handelt es sich um eine Kombination aus Spritzgiessen und Blasformen. Dabei wird zunächst in einem Spritzgiessprozess in einer Spritzform ein Preform hergestellt. Neuerdings sind auch Fliesspressverfahren zur Herstellung von Preforms vorgeschlagen worden. Der Preform weist einen im wesentlichen länglichen, zylindrischen Körper auf und ist an einem Längsende geschlossen ausgebildet. Ein Supportring trennt den Körper von einem Halsabschnitt mit einer Ausgiessöffnung. Dieser Halsabschnitt weist üblicherweise bereits die spätere Form des Flaschenhalses auf. An der Aussenseite dieses Halsbaschnitts sind auch meist bereits Gewindeabschnitte oder dergleichen für die Festlegung eines Verschlussteils ausgebildet. Der Preform wird nach seiner Herstellung in einem Kunststoffspritzverfahren aus der Spritzform entformt, bei Bedarf konditioniert und in eine Blasform einer Blasmaschine eingebracht, in welcher er schliesslich mit Überdruck auf die gewünschte Form aufgeblasen wird. Im Spritzstreckblasverfahren wird der gespritzte Preform beim Blasprozess zusätzlich mit einem Reckdorn verstreckt. Es ist auch bereits ein Spritzblasverfahren bekannt, bei dem der Blasprozess direkt anschliessend an das Spritzen des Preforms erfolgt. Der Preform verbleibt dabei auf dem Spritzdorn, und eine Teil der Spritzform bildet einen Abschnitt der Blasform.

Der Supportring dient zum Transport des Preforms in der Blasmaschine und zur Abstützung des Preforms an der Oberfläche der Blasform. Bei einem Typ von Blasmaschinen bildet die Oberfläche des Supportrings zugleich eine Dichtfläche für die Mündung der Blasdüse der Blasmaschine. Dies bedingt aber eine Blasdüse mit einem relativ grossen Durchmesser, da ja der den Supportring überragende Teil des Halsabschnitts von der Blasdüse aufgenommen werden muss. Berücksichtigt man, dass an der Aussenfläche des Halsabschnitts bereits Gewindeabschnitte oder dergleichen ausgebildet sind, so ist unmittelbar ersichtlich, dass der Innendurchmesser der Blasdüse sehr gross ausgebildet sein muss, damit es zu keinen Beschädigungen des Halsabschnitts kommen kann. Bei Kunststoffflaschen mit grossen Ausgiessöffnungen führt dies zu Blasdüsen mit übergrossen Durchmessern. Die Abdichtung der Blasdüse an der Kreisringfläche des Supportrings muss mit relativ grossen Anpressdrücken erfolgen, um ein Entweichen des Aufblasmediums, üblicherweise Luft, zu verhindern. Bei Abnützung, Ungleichmässigkeiten oder einer Beschädigung der Blasdüse ist bei den aufeinander wirkenden Flächen eine ausreichende Abdichtung oft nur schwer zu erreichen. Die Probleme mit der Masshaltigkeit bei den Herstellverfahren des Stands der Technik werden durch den Temperaturunterschied zwischen dem innerhalb der Formkavität befindlichen Körper des Preforms und dem aus der Formkavität ragenden Halsabschnitt meist noch vergrössert.

Abgesehen von seiner Funktion zur Abstützung beim Transport des Preforms in der Blasmaschine und an der Oberfläche der Blasform und gegebenenfalls zur Abdichtung der Blasdüse hat der Supportring am fertig geblasenen Behälter, beispielsweise bei einer Kunststoffflasche, keine Funktion. Andererseits wird bei der massentechnischen Herstellung von Kunststoffbehältern, insbesondere Kunststoffflaschen, ständig danach getrachtet, die Herstellkosten zu verringern.

Aus der US 2002/0037338 A1 sind ein Verfahren und eine Vorrichtung zur Stabilisierung eines Preforms und eines streckgeblasenen Behälters in einer Blasform, bekannt, wobei der Preform einen Supportring aufweist und dazu ausgebildet ist, von der Vorrichtung oberhalb des Supportrings gehalten zu werden.

Die IP 54086560 beschäftigt sich mit der gasdichten Fixierung eines Preforms, wobei der Preform einen Halsabschnitt und einen Körper aufweist und oberhalb des Übergangs vom Halsabschnitt zum Körper in Kontakt mit der Blasform steht. Der Preform kann einen Supportring aufweisen.

WO 98/52729 offenbart einen Preform mit einem ein- oder mehrschichtigen inneren Liner und einer äusseren Schicht. Der Preform weist einen Halsabschnitt auf, der durch eine Wärmebehandlung kristallisiert wird, um diesem später nicht gestreckten Teil grössere Stabilität zu verleihen. Die angeformte äussere Schicht weist einen Supportring auf.

Aufgabe der vorliegenden Erfindung ist es daher , die geschilderten Nachteile des Stands der Technik zu beheben. Die Kosten für die Herstellung eines Kunststoffbehälters, insbesondere einer Kunststoffflasche, in einem Spritzblas- bzw. Spritzstreckblasverfahren sollen verringert werden können. Beschädigungen der Dichtfläche einer hergestellten Kunststoffflasche sollen verhindert werden. Dabei sollen Blasdüsen mit übergross dimensionierten Mündungen vermieden werden. Während des Blasprozesses soll eine gute Abdichtung zwischen dem Preform und der Blasdüse gewährleistet sein. Der einfache Transport des Preforms innerhalb der Blasmaschine und seine Einsetzbarkeit in die Blasform soll gewährleistet sein. Der fertig aufgeblasene Kunststoffbehälter soll einfach und kontrolliert entformbar sein.

Offenbart ist unter anderem ein Verfahren zur Herstellung einer Kunststoffflasche durch Aufblasen eines Preforms. Ein für die Durchführung des Verfahrens ausgebildeter Preform weist die im kennzeichnenden Abschnitt des unabhängigen Patentanspruchs 1 angeführten Merkmale auf. Eine für die Verwendung des Preforms ausgebildete Blasform ist ebenfalls offenbart. Weiterbildungen und/oder vorteilhafte Ausführungsvarianten der Erfindung sind Gegenstand der abhängigen Ansprüche.

Es wird ein Verfahren zur Herstellung einer Kunststoffflasche, insbesondere einer PET-Flasche, vorgeschlagen, bei dem ein Preform, der einen einseitig geschlossenen Körper aufweist, an den ein Halsabschnitt mit einer Ausgiessöffnung anschliesst, und der in einem Kunststoffspritzverfahren oder in einem Fliesspressverfahren hergestellt ist, in eine Formkavität einer Blasform eingebracht und mit Hilfe einer Blasdüse durch Überdruck gemäss der Formkavität aufgeblasen wird. Zum Unterschied von den aus dem Stand der Technik bekannten Verfahren erfolgt die Abdichtung zwischen der Blasdüse und dem Preform im Inneren des Preforms.

Indem die Abdichtung im Inneren des Preforms erfolgt, werden Deformationen des Halsabschnitts, insbesondere der die Ausgiessöffnung berandenden Stirnfläche vermieden. Gegenüber den Verfahrensvarianten, bei denen die Abdichtung auf der Oberseite des umlaufenden Supportrings erfolgt, weist das vorgeschlagene Verfahren den Vorteil auf, dass die Blasdüse einen deutlich kleineren Durchmesser aufweist. Da die Abdichtung nunmehr im Inneren des Preforms erfolgt, muss die Blasdüse den oberhalb des Supportrings befindlichen Halsabschnitt des Preforms nicht mehr aufnehmen. Dadurch ist auch die Gefahr von Beschädigungen von an der Aussenseite des Halsabschnittes vorgesehenen Gewindeabschnitten oder dergleichen beseitigt. Die Dimensionierung der Blasdüse kann durch die vorgeschlagene Verfahrensführung auch bei der Herstellung von Kunststoffflaschen mit grösseren Durchmessern der Ausgiessöffnung klein gehalten werden. Dies hat Vorteile hinsichtlich der Ausbildung der Blasdüse, hinsichtlich der erforderlichen Anpresskräfte und auch bezüglich der für den Blasprozess erforderlichen Mediendrücke. Durch die Abdichtung im Inneren des Preforms kann auch die Wandstärke im Halsabschnitt verringert werden. Auf einen umlaufenden Supportring, der den Körper des Preforms vom Halsabschnitt trennt kann gänzlich verzichtet werden. Dies führt zu einer nicht unerheblichen Materialeinsparung, welche sich vorteilhaft auf die Herstellkosten der Kunststoffflasche auswirkt.

Die Abdichtung zwischen der Blasdüse und dem Preform im Inneren des Preforms erfolgt mit Vorteil durch einen ringförmigen Kontakt der Mündung der Blasdüse mit einer Innenfläche im Halsabschnitt des Preforms. Die Abdichtung erfolgt auch bei dem vorgeschlagenen Verfahren allein durch den direkten Kontakt der Dichtpartner.

Es erweist sich auch von Vorteil, wenn die Abdichtung zwischen der Blasdüse und dem Preform in einem Übergangsbereich des Halsabschnitts zum zylindrischen Körper des Preforms erfolgt. Im Übergangsbereich weist der Preform eine erhöhte Steifigkeit auf. Dadurch können unerwünschte Verformungen noch besser vermieden werden.

Die für die Abdichtung herangezogene Innenfläche des Halsabschnitts ist mit Vorteil eine Konusfläche. Im Zusammenwirken der Konusfläche mit dem Mündungsrand der Blasdüse ergibt sich im wesentlichen ein linienförmiger Kontakt. Die Anpresskraft der Blasdüse kann derart reguliert werden, dass sich der Mündungsrand geringfügig in die Konusfläche einpresst. Dies hat den Vorteil, dass durch den Abdruck an der fertig geblasenen Kunststoffflasche überprüft werden kann, ob die Blasdüse korrekt justiert ist oder Beschädigungen aufweist.

Die für die Abdichtung herangezogene Innenfläche des Preforms kann auch eine senkrecht zur Achse des Preforms verlaufende Ringfläche sein. Auch in diesem Fall erweist sich eine Abdichtung über einen Linienkontakt von Vorteil. Dazu ist der Mündungsrand der Blasdüse entsprechend scharfkantig oder mit einem Radius versehen.

Das vorgeschlagene Verfahren mit der Abdichtung im Inneren des Preforms ist sowohl für Blasverfahren als auch für das Streckblasverfahren, bei dem der Preform zusätzlich zum Aufblasen mit einem Reckdorn verstreckt wird, geeignet.

Durch die Erfindung wird ein Preform zur Durchführung des vorgeschlagenen Verfahrens vorgeschlagen. Der Preform weist einen länglichen Körper auf, dessen eines Längsende geschlossen ausgebildet ist und an dessen anderem Längsende ein Halsabschnitt mit einer Ausgiessöffnung ausgebildet ist. Zum Unterschied von den bekannten Preformlingen weist der Halsabschnitt einen grösseren Ausssendurchmesser auf als der Körper und ist am Übergang vom Körper zum Halsabschnitt eine Abstützfläche ausgebildet.

Der grössere Aussendurchmesser des Halsabschnitts und die Abstützfläche am Übergang vom Halsabschnitt zum Körper des Preforms erlauben es, auf den umlaufenden Supportring, der bei den bekannten Preforms den Körper vom Halsabschnitt trennt, zu verzichten. Der Preform stützt sich mit der Abstützfläche an der Oberfläche der Blasform ab. Nur der Körper ragt in die Blasformkavität. Der grössere Aussendurchmesser des Halsabschnitts verhindert dabei, dass der Preform in die Formkavität fällt. Der grössere Durchmesser des Halsbaschnitts erleichtert auch das Einfahren der Blasdüse in das Innere des Preforms, um hier die Abdichtung zu schaffen.

Die am Preform ausgebildete Abstützfläche ist mit Vorteil eine ringförmig umlaufende Schulter. Die umlaufende Schulter übernimmt bei dem neuen Preform die Funktion des von den Preforms des Stands der Technik bekannten umlaufenden Supportrings mit im wesentlichen radialer Ausrichtung. Dadurch kann der neue Preform ohne weitere Modifikationen in bereits bestehende Blasformen eingesetzt werden. Die umlaufende Schulter dient auch für den Transport der Preforms zu den verschiedenen Stationen. Dabei können die bestehenden Transportsystem weiter genutzt werden. Es versteht sich, dass die Abstützfläche bei Bedarf auch als Konusfläche ausgebildet sein kann.

Der vom Aussendurchmesser her grössere Halsabschnitt resultiert darin, dass der Preform wenigstens in einem an die Ausgiessöffnung angrenzenden Bereich einen grösseren Innendurchmesser aufweist als der Körper. Der grössere Innendurchmesser erleichtert das Einfahren der Blasdüse. Aus dieser geometrischen Ausbildung resultiert ein Übergang auf einen kleineren Innendurchmesser des Körpers des Preforms, der für die Abdichtung genutzt wird. Dieser Übergang kann als eine umlaufende radiale Fläche ausgebildet sein. Es erweist sich als vorteilhaft, wenn eine Innenfläche des Halsabschnitts im Übergangsbereich zum Körper des Preforms als Konusfläche ausgebildet ist. Die Konusfläche ermöglicht eine sehr zuverlässige Abdichtung der Blasdüse mit der Innenfläche des Preforms. Dabei kommt es zu einem linienförmigen Kontakt der Dichtpartner. Durch die Anpresskraft der Blasdüse kann sichergestellt sein, dass sich der Mündungsrand der Blasdüse auf der Innenfläche abbildet und auch an der fertig geblasenen Kunststoffflasche sichtbar ist. So erhält man eine einfache Kontrolle über die Justierung der Blasdüse und über die mechanische Beschaffenheit der Kontaktbereiche.

Für die einfache Herstellung von Kunststoffflaschen mit relativ weiten Öffnungen besitzt der Preform eine Ausgiessöffnung mit einem Öffnungsdurchmesser von etwa 35 mm bis etwa 95 mm. Derartige Weithalsflaschen sind mit den konventionellen Verfahren nur sehr schwer herstellbar. Ihre Herstellung bedingt spezielle Blasdüsen und beinhaltet immer die Gefahr einer Beschädigung des Halsabschnitts durch das Anpressen der Blasdüse.

Als Materialien für den Preform kommen alle für das Spritzblas- bzw. Spritzstreckblasverfahren geeigneten Materialien in Frage. Beispielsweise sind dies PET, PET-G, HDPE, PP, PVC oder auch gefüllte Kunststoffe. Vorzugsweise ist der Preform in einem Kunststoffspritzverfahren oder auch in einem Fliesspressverfahren aus PET hergestellt.

Eine Blasform, die insbesondere für einen Preform gemäss der Erfindung ausgebildet ist, besitzt wenigstens zwei Formteile, die aus einer Schliess- in eine Offenstellung und umgekehrt bewegbar sind. In den meisten Fällen setzt sich die Blasform aus zwei Formhälften zusammen. Die Formteile begrenzen eine Formkavität, die an einer Oberseite der Blasform eine Mündung aufweist. Ein in Umfangsrichtung verlaufender Auflagesteg für den Preform begrenzt die Mündung. An der Oberseite der Blasform sind wenigstens zwei nutenförmige Aussparungen vorgesehen, die im wesentlichen radial verlaufen und am Auflagesteg für den Preform enden. Die nutenförmigen Aussparungen sind zur Aufnahme von zustellbaren Greifern ausgebildet.

Die Blasform ist insbesondere zur Verwendung von Preforms ausgebildet, welche keinen Supportring aufweisen. Die Abstützfläche des in die Blasform eingesetzten Preforms stützt sich auf dem die Mündung der Formkavität berandenden Auflagesteg ab. Die radial verlaufenden Aussparungen an der Oberfläche der Blasform dienen der Aufnahme von Greifern und erlauben es, dass der Preform, der sich mit seiner Abstützfläche auf den Greifern ruht, sicher in die Formkavität eingesetzt werden kann. Zur Entnahme des aufgeblasenen Kunststoffbehälters können die Greifer in den Aussparungen zugestellt werden, wobei sie unter die Abstützfläche des aus der Formkavität ragenden Abschnitts des Preforms bzw. des Behälterhalses gleiten können.

Aus Platzgründen sind zweckmässigerweise zwei nutenförmige Aussparungen vorgesehen, die einander diametral gegenüberliegen. Die nutenförmigen Aussparungen weisen eine Breite auf, die sich am Auflagesteg in dessen Umfangsrichtung über einen Winkel von etwa 10° bis etwa 45° erstreckt. Dadurch können die Greifer eine Form aufweisen, die der Umfangskontur des aus der Formkavität ragenden Abschnitts des Preforms bzw. des fertig geblasenen Kunststoffbehälters angepasst ist. Dies erlaubt eine schonendere Behandlung des Preforms bzw. des fertig geblasenen Behälters.

Bei der Zustellung der Greifer bilden die nutenförmigen Aussparungen an der Oberseite der Blasform zugleich radiale Führungen. Dadurch ist bei Bedarf eine lagegenaue Positioinierung des Preforms in der Formkavität ermöglicht.

Für die massentechnische Herstellung der Kunststoffbehälter ist die Blasform als ein Mehrfachwerkzeug mit einer Mehrzahl von Formkavitäten ausgebildet. Dabei besitzt jede Formkavität an der Oberseite der Blasform ein Mündung. In jedem Mündungsbereich sind nutenförmige Aussparungen zur Aufnahme von Greifern vorgesehen. Diese erlaubt die gleichzeitige Beschickung der Formkavitäten mit Preforms und die gleichzeitige Entnahme der fertig geblasenen Kunststoffbehälter. Die nutenförmigen Aussparungen verlaufen dabei im wesentlichen parallel zueinander. Dadurch ist sichergestellt, dass die Greifer einander nicht behindern können.

Weitere Vorteile und Merkmale der Erfindung ergeben sich aus der nachfolgenden Beschreibung in Verbindung mit den nicht massstabsgetreuen, schematischen Darstellungen. Es zeigen:
- Fig. 1: einen in eine Blasform eingesetzten Preform mit angesetzter Blasdüse;
- Fig. 2: eine vergrösserte Detaildarstellung gemäss dem strichlierten Rahmen X in Fig. 1;
- Fig. 3: einen Axialschnitt einer Blasform mit einem in die Formkavität eingesetztem Preform inclusive Greifer und Blasdüse;
- Fig.4: ein vergrössertes Detail des strichpunktiert angedeuteten Abschnitts Y in Fig. 3; und
- Fig.5: einen Querschnitt der Blasform gemäss Schnittlinie V-V in Fig. 3.

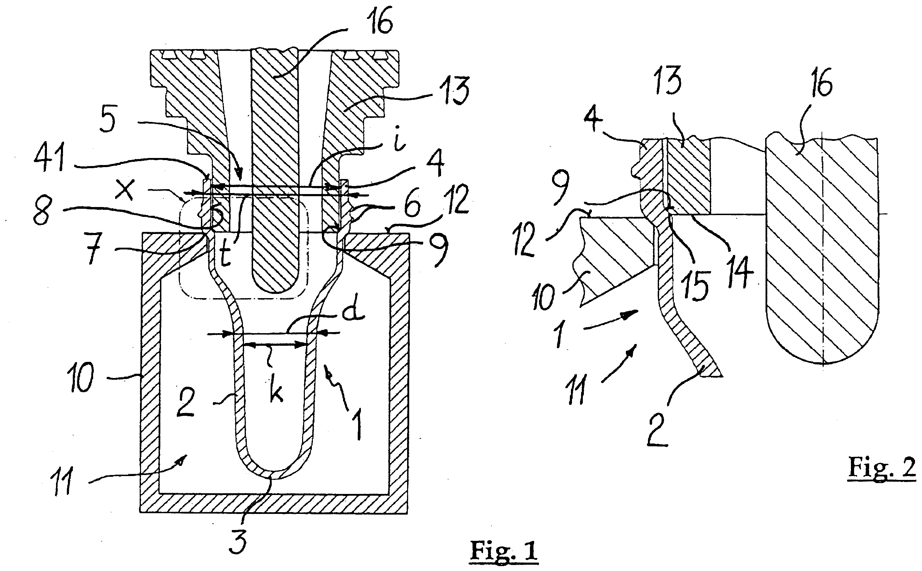

Der in Fig. 1 dargestellte Preform 1 weist einen länglichen Körper 2 auf, dessen eines Längsende 3 verschlossen ausgebildet ist. Am gegenüberliegenden Längsende ist ein Halsabschnitt 4 mit einer Ausgiessöffnung 5 ausgebildet. An der Aussenseite des Halsabschnitts 4 sind Gewindeabschnitte 6 ausgebildet, die an der fertig geblasenen Kunststoffflasche für die Festlegung einer Verschlusskappe oder dergleichen dienen. Aus Fig. 1 ist ersichtlich, dass der Körper 2 einen Aussendurchmesser d aufweist, der kleiner ist als der Aussendurchmesser t des Halsabschnitts 4. Am Übergang vom Halsabschnitt 4 zum Körper 2 ist am Preform 1 eine umlaufende Ringschulter 7 ausgebildet. Die Ringschulter 7 verläuft bei dem dargestellten Ausführungsbeispiel des Preforms 1 radial. Sie kann aber auch als Konusfläche ausgebildet sein. Die Ringschulter 7 dient als Angriffsbereich für Transportmittel für den Preform 1 und als Abstützfläche gegenüber der Blasform.

Der Halsabschnitt 4 weist einen Innendurchmesser i auf, der grösser ist als der Innendurchmesser k des Körpers 2 des Preforms 1. Dabei kann der Innendurchmesser k des Körpers 2 des Preforms auch gestuft ausgebildet sein. Der Innendurchmesser i des Halsabschnitts 4 beträgt im Bereich der Ausgiessöffnung 5 für die Herstellung sogenannter Weithalsflaschen beispielsweise etwa 35 mm bis etwa 95 mm. Der Halsabschnitt 4 weist eine Innenfläche 8 auf, die in einem Übergangsbereich 9 in eine Innenfläche des Körpers 2 übergeht. Bei dem dargestellten Ausführungsbeispiel des Preforms 1 ist die Innenfläche 8 im Übergangsbereich 9 als Konusfläche ausgebildet. In alternativen Ausführungsvarianten kann die Innenfläche im Übergangsbereich auch als radiale Ringfläche ausgebildet sein. Der konische Abschnitt 9 der Innenfläche 8 des Halsabschnitts 4 dient beim Blasprozess zur Abdichtung gegenüber der Blasdüse.

Der Preform 1 kann aus allen für den Spritzblas- bzw. Spritzstreckblasverfahren geeigneten Kunststoffen bestehen. Dies sind beispielsweise PET, PET-G, HDPE, PP, PVC oder auch aus einem gefüllten Kunststoff. Ein bevorzugtes Material ist PET (Polyethylenterephthalat). Die Herstellung des Preforms 1 erfolgt beispielsweise in einem Kunststoffspritzverfahren oder in einem Fliesspressverfahren. Die Herstellung des Preforms 1 kann unmittelbar vor dem Blasprozess erfolgen. Die Preforms 1 können aber auch separat hergestellt und gelagert werden, bis sie für die Herstellung der Kunststoffflasche benötigt werden.

Wie aus Fig. 1 und insbesondere aus der Detaildarstellung in Fig. 2 ersichtlich ist, ist der Preform 1 in eine Blasform 10 eingesetzt. Die Blasform 10 besitzt eine Formkavität 11, welche die Gestalt der aufzublasenden Kunststoffflasche festlegt. Der Preform 1 stützt sich mit der als Ringschulter ausgebildeten Abstützfläche 7 auf der Oberfläche 12 der Blasform ab. Die Abstützfläche 7 verhindert, dass der Preform 1 in die Formkavität 11 der Blasform fällt. Der Halsabschnitt 4 des Preforms 1 erstreckt sich ausserhalb der Formkavität 11 und wird vom Blasprozess nicht beeinträchtigt. Insbesondere dürfen die Stirnfläche 41 des Halsabschnitts 4, die bei der aufgeblasenen Kunststoffflasche als Dichtfläche dient, und die an der Aussenseite des Halsabschnitts 4 ausgebildeten Gewindeabschnitte 6 nicht verformt oder beschädigt werden.

Das Aufblasen des Preforms 1 erfolgt mit Blasdrücken von bis zu 40 bar und mehr. Dazu muss zwischen dem Preform 1 und einer Blasdüse 13 für eine ausreichende Abdichtung gesorgt werden. Gemäss dem neuen Verfahren erfolgt die Abdichtung im Inneren des Preforms 1. Dazu wird die Blasdüse 13 in das Innere des Preforms eingefahren, bis der Mündungsrand 14 der Blasdüse 13 an dem als Konusfläche ausgebildeten Übergangsabschnitt 9 der Innenfläche 8 des Halsabschnitts 4 anliegt. Die Abdichtung erfolgt durch einen Linienkontakt zwischen der Aussenkante 15 der Blasdüse 13 und der Konusfläche 9. Die Anpresskraft der Blasdüse 13 wird derart gewählt, dass sich die Aussenkante 15 der Blasdüse 13 etwas in die Konusfläche 9 eingräbt. Dies verbessert die Abdichtung und ermöglicht es, an der fertig geblasenen Kunststoffflasche die korrekte Ausrichtung der Blasdüse 13 und deren mechanische Beschaffenheit im Mündungsbereich zu überprüfen. So deuten Unterbrechungen des ringförmigen Abdruckes der Blasdüse auf Beschädigungen hin. Ein nicht vollständiger ringförmiger Abdruck kann auf eine erforderliche Neuausrichtung der Blasdüse auf die Blasform hinweisen. Wie in Fig. 2 angedeutet ist, kann der Preform in einem Spritzstreckblasverfahren zusätzlich zum Blasprozess auch noch mit einem Reckdorn 16 in axialer Richtung verstreckt werden.

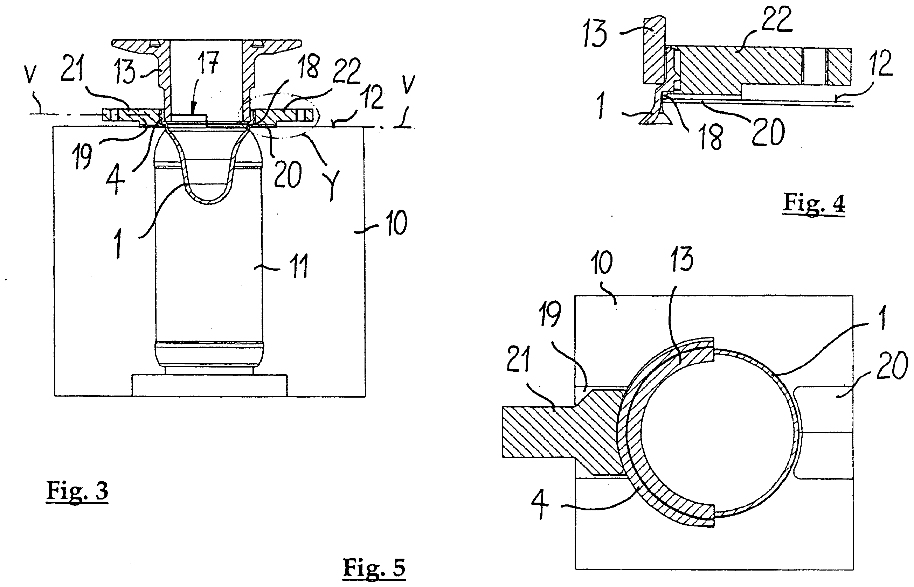

Fig. 3 zeigt einen Axialschnitt der Blasform 10 mit dem in die Formkavität 11 eingesetzten Preform 1. Der Körper 2 des Preforms 1 ragt in die Formkavität 11 während der Halsabschnitt 4 des Preforms 1 sich oberhalb der Mündung 17 der Formkavität 11 befindet. Der Preform 1 stützt sich mit seiner als Ringschulter ausgebildeten Abstützfläche 7 auf einem die Mündung 17 der Formkavität 11 berandenden Auflagesteg 18 ab. Die Blasdüse 13 ragt in das Innere des Preforms 11. Ihr Mündungsrand 14 liegt an dem als Konusfläche ausgebildeten Übergangsabschnitt 9 der Innenfläche 8 des Halsabschnitts 4 an. Zu beiden Seiten der Mündung 17 sind in der Oberfläche 12 der Blasform 10 nutenartige Aussparungen 19, 20 vorgesehen. Die nutenartigen Aussparungen 19, 20 liegen einander etwa diametral gegenüber und enden am die Mündung 17 der Fomkavität 11 berandenden Auflagesteg 18. Die dienen als Führung für Greifer 21, 22, mit denen der Preform 1 in die Formkavität 11 der Blasform 10 eingesetzt bzw. der aufgeblasene Kunststoffbehälter wieder entnommen wird. Die Greifer 21, 22 können in den nutenartigen Aussparungen 19, 20 auf den Preform 1 zugestellt werden und gleiten unter die Abstützfläche 7 des Preforms 1.

Fig. 4 zeigt den in Fig. 3 strichpunktiert angedeuteten Abschnitt Y in vergrössertem Massstab. Aus der Darstellung ist ersichtlich, dass sich der Preform mit der Abstützfläche 7 am die Mündung 17 berandenden Auflagesteg 18 abstützt. Die Blasdüse ist mit dem Bezugszeichen 13 angedeutet. Ein Greifer 22 ist in der Aussparung 20 geführt und ragt unter die Abstützfläche 7.

Die Querschnittsdarstellung in Fig. 5 zeigt die gemäss der Schnittlinie V-V in Fig. 3 geschnittene Blasform. Die Schnittlinie V-V verläuft dabei in der linken Hälfte der Fig. 5 durch den Greifer 21 und den sich am Auflagesteg abstützenden Preform 1. In der rechten Hälfte der Fig. 5 verläuft die Schnittlinie entlang der Oberfläche 12 der Blasform 10. Die nutenförmigen Aussparungen in der Oberfläche 12 der Blasform tragen die Bezugszeichen 19 und 20. Die nutenartigen Aussparungen 19, 20 weisen jeweils eine Breite auf, die sich am Auflagesteg über einen Winkelbereich von etwa 10° bis etwa 45° erstreckt. Aus der Darstellung ist ersichtlich, dass der Greifer 21 an seinem freien Ende eine Form aufweist, die der Umfangskontur des aus der Formkavität ragenden Halsabschnitts 4 des Preforms angepasst ist.

Indem die Abdichtung zwischen dem Preform und der Blasdüse im Inneren des Preforms erfolgt, werden Deformationen des Halsabschnitts, insbesondere der die Ausgiessöffnung berandenden Stirnfläche vermieden. Gegenüber den Verfahrensvarianten, bei denen die Abdichtung auf der Oberseite des umlaufenden Supportrings erfolgt, weist das vorgeschlagene Verfahren den Vorteil auf, dass die Blasdüse einen deutlich kleineren Durchmesser aufweist. Da die Abdichtung nunmehr im Inneren des Preforms erfolgt, muss die Blasdüse den oberhalb des Supportrings befindlichen Halsabschnitt des Preforms nicht mehr aufnehmen. Dadurch ist auch die Gefahr von Beschädigungen von an der Aussenseite des Halsabschnittes vorgesehenen Gewindeabschnitten oder dergleichen beseitigt. Die Dimensionierung der Blasdüse kann durch die vorgeschlagene Verfahrensführung auch bei der Herstellung von Kunststoffflaschen mit grösseren Durchmessern der Ausgiessöffnung klein gehalten werden. Dies hat Vorteile hinsichtlich der Ausbildung der Blasdüse, hinsichtlich der erforderlichen Anpresskräfte und auch bezüglich der für den Blasprozess erforderlichen Mediendrücke. Durch die Abdichtung im Inneren des Preforms kann auch die Wandstärke im Halsabschnitt verringert werden. Auf einen umlaufenden Supportring, der den Körper des Preforms vom Halsabschnitt trennt, kann gänzlich verzichtet werden. Dies führt zu einer nicht unerheblichen Materialeinsparung, welche sich vorteilhaft auf die Herstellkosten der Kunststoffflasche auswirkt.

## Patentansprüche

1. Preform zur Herstellung von Kunststoffflaschen in einem Blas- bzw. Streckblasverfahren, mit einem im wesentlichen zylindrischen, länglichen Körper (2)-, dessen eines Längsende (3) geschlossen ausgebildet ist und an dessen anderem Längsende ein Halsabschnitt (4) mit einer Ausgiessöffnung (5) ausgebildet ist, **dadurch gekennzeichnet, dass** der Halsabschnitt (4) einen grösseren Aussendurchmesser aufweist als der Körper (2), dass am Übergang vom Körper (2) zum Halsabschnitt (4) eine Abstützfläche (7) ausgebildet ist, und dass auf einen umlaufenden Supportring, der den Körper (2) vom Halsabschnitt (4) trennt, verzichtet ist.

2. Preform nach Anspruch 1, **dadurch gekennzeichnet, dass** die Abstützfläche (7) eine ringförmig umlaufende Schulter ist.

3. Preform nach Anspruch 1 oder 2, **dadurch gekennzeichnet, dass** die Abstützfläche (7) als Konusfläche ausgebildet ist.

4. Preform nach einem der vorhergehenden Ansprüche, **dadurch gekennzeichnet, dass** der Halsabschnitt (4) wenigstens in einem an die Ausgiessöffnung (5) angrenzenden Bereich einen grösseren Innendurchmesser (i) aufweist als der Körper (2).

5. Preform nach Anspruch 4, **dadurch gekennzeichnet, dass** eine Innenfläche (8) des Halsabschnitts (4) in einem Übergangsbereich (9) zum Körper (2) des Preforms (1) als Konusfläche ausgebildet ist.

6. Preform nach einem der vorhergehenden Ansprüche, **dadurch gekennzeichnet, dass** der Halsabschnitt im Bereich der Ausgiessöffnung (5) einen Innendurchmesser (i) von etwa 35 mm bis etwa 95 mm aufweist.

7. Preform nach einem der vorhergehenden Ansprüche, **dadurch gekennzeichnet, dass** er vorzugsweise in einem Kunststoffspritzverfahren aus PET, PET-G, HDPE, PP, PVC oder auch aus einem gefüllten Kunststoff hergestellt ist.

## Claims

1. Preform for producing plastic bottles in a blow moulding or stretch blow moulding process, with an essentially cylindrical, oblong body (2) whose one lengthwise end is formed closed, and on whose other lengthwise end a neck section (4) with a pour opening (5) is formed, **characterised in that**, the neck section (4) has a greater outside diameter than the body (2), a support surface (7) is formed on the transition from the body (2) to the neck section (4), and a peripheral support ring which separates the body (2) from the neck section (4) is omitted.

2. Preform according to claim 1, **characterized in that**, the support surface (7) is an annular, peripheral shoulder.

3. Preform according to claim 1 or 2, **characterized in that**, the support surface (7) is made as the surface of a cone.

4. Preform according to anyone of the previous claims, **characterized in that**, the neck section (4) at least in a region bordering the pour opening (5) has a greater inside diameter (i) than the body (2).

5. Preform according to claim 4, **characterized in that**, an inner surface (8) of the neck section (4) in a transition region (9) to the body (2) of the preform (1) is made as the surface of a cone.

6. Preform according to anyone of the previous claims, **characterized in that**, the neck section in the region of the pour opening (5) has an inside diameter (i) from roughly 35 mm to roughly 95 mm.

7. Preform according to anyone of the previous claims, **characterized in that**, it is produced preferably in a plastic injection process from PET, PET-G, HDPE, PP, PVC or also from a filled plastic.

## Revendications

1. Préforme pour la fabrication de bouteilles en matière plastique par un procédé de soufflage ou d'étirage-soufflage avec un corps allongé (2), substantiellement cylindrique, dont l'une des extrémités longitudinales (3) est configurée fermée et à l'autre extrémité longitudinale duquel il est formé une portion de col (4) avec une ouverture verseuse (5), **caractérisée en ce que** la portion de col (4) présente un plus grand diamètre extérieur que le corps (2), qu'une surface d'appui (7) est formée à la transition du corps (2) et de la portion de col (4) et qu'il est renoncé à un anneau de support périphérique qui sépare le corps (2) de la portion de col (4).

2. Préforme selon la revendication 1, **caractérisée en ce que** la surface d'appui (7) est un épaulement périphérique en forme d'anneau.

3. Préforme selon la revendication 1 ou 2, **caractérisée en ce que** la surface d'appui (7) est configurée comme la surface d'un cône.

4. Préforme selon l'une des revendications précédentes, **caractérisée en ce que** la portion de col (4) présente, au moins dans une zone adjacente à l'ouverture verseuse (5), un diamètre intérieur plus grand (i) que le corps (2).

5. Préforme selon la revendication 4, **caractérisée en ce qu'**une surface intérieure (8) de la portion de col (4) est configurée, dans une zone de transition (9) avec le corps (2) de la préforme (1), comme la surface d'un cône.

6. Préforme selon l'une des revendications précédentes, **caractérisée en ce que** la portion de col (4) présente, dans la zone de l'ouverture verseuse (5), un diamètre intérieur (i) d'environ 35 mm à environ 95 mm.

7. Préforme selon l'une des revendications précédentes, **caractérisée en ce qu'**elle est fabriquée de préférence par un procédé par injection de matière plastique en PET, PET-G, HDPE, PP, PCV ou aussi en une matière plastique remplie.
